(19)

Europäisches Patentamt

European Patent Office

Office européen des brevets

(11) **EP 1 639 048 B1**

(12) **EUROPEAN PATENT SPECIFICATION**

(45) Date of publication and mention
of the grant of the patent:
**14.11.2012 Bulletin 2012/46**

(21) Application number: **04756709.4**

(22) Date of filing: **01.07.2004**

(51) Int Cl.:
**C08F 8/30** (2006.01)

(86) International application number:
**PCT/US2004/021685**

(87) International publication number:
**WO 2005/003243 (13.01.2005 Gazette 2005/02)**

(54) **TWO COMPONENT COATING COMPOSITIONS AND COATINGS PRODUCED THEREFROM**

ZWEIKOMPONENTIGE LACKE UND ENTSPRECHENDE LACKIERUNGEN

COMPOSITIONS DE REVETEMENT A DEUX COMPOSANTS ET REVETEMENTS PRODUITS A PARTIR DESDITES COMPOSITIONS

(84) Designated Contracting States:
**BE DE ES FR GB**

(30) Priority: **02.07.2003 US 612495**
**10.07.2003 US 617270**

(43) Date of publication of application:
**29.03.2006 Bulletin 2006/13**

(73) Proprietor: **E.I. DU PONT DE NEMOURS AND COMPANY**
**Wilmington, DE 19898 (US)**

(72) Inventor: **GRADY, Michael, Charles**
**Oaklyn, NJ 08107 (US)**

(74) Representative: **DuPont Performance Coatings**
**Biering/Blum/Kimpel**
**Patentabteilung 102 JL**
**Christbusch 25**
**42285 Wuppertal (DE)**

(56) References cited:
**WO-A-2004/007627       US-A- 5 098 956**
**US-A1- 2002 040 097**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of Invention

This invention generally relates to curable coating compositions used in automotive refinish and Original Equipment Manufacturing (OEM) applications and it particularly relates to two component coating compositions that cure under ambient conditions and more particularly to those compositions having low VOC (volatile organic content).

### Background of the Invention

A number of clear and pigmented coating compositions are utilized in various coatings, such as, for example, basecoats and clearcoats used in automotive refinish coatings, which are generally solvent based.

In repairing damage, such as dents to auto bodies, the original coating in and around the damaged area is typically sanded or ground out by mechanical means. Some times the original coating is stripped off from a portion or off the entire auto body to expose the bare metal underneath. After repairing the damage, the repaired surface is coated, preferably with low VOC coating compositions, typically in portable or permanent low cost painting enclosures vented to atmosphere to remove the organic solvents from the freshly applied paint coatings in a safe manner from the standpoint of operator health and explosion hazard. Typically, the drying and curing of the freshly applied paint takes place within these enclosures. Furthermore, the foregoing drying and curing steps take place within the enclosure to also prevent the wet paint from collecting dirt in the air or other contaminants.

As these paint enclosures take up significant floor space of typical small auto body paint repair shops, these shops prefer to dry and cure these paints as fast as possible. More expensive enclosures are frequently provided with heat sources, such as conventional heat lamps located inside the enclosure to cure the freshly applied paint at accelerated rates. Therefore, to provide more cost effective utilization of shop floor space and to minimize fire hazards resulting from wet coatings from solvent based coating compositions, there exists a continuing need for fast curing coating formulations which cure under ambient conditions while still providing outstanding performance characteristics particularly chip resistance, mar-resistance, durability and appearance.

In the past, several approaches have been used to improve the productivity of isocyanate crosslinked coatings. One approach was based on using higher Tg acrylic polymers (US 5,279,862 and 5,314,953) and another on the use of reactive oligomers (US 6,221,494 B1). Due to the high Mw and high Tg of such acrylic polymers, the fast dry was achievable, but the film vitrified and the faster cure was not achievable. The viscosity of these types of acrylic polymers was also comparatively high and thus that approach resulted in higher VOC. The reactive oligomer approach improved the appearance and the rate of cure of the coating at lower VOC, however these oligomers are difficult to make at high enough Tg needed to reduce the dry time. Moreover, the higher the amount of these oligomers in the coating compositions, the lower was the hardness of the resultant coatings.

US 2002/040097 discloses thermosetting compositions comprising a cross-linking agent such as polyisocyanate and a hydroxy functional polymer. The hydroxy functional polymer is prepared by atom transfer radical polymerization (ATRP) of typical acrylic and methacrylic monomers. ATRP requires special initiating systems, i.e. an organic halide and a metal complex. Those initiating systems are often characterized by having an intense color like dark green. Such color obviously may contaminate the color of the desired coatings, and the use of of ATRP may introduce metals like copper that can be potentially harmful to the environment, or halide that may form corrosive products.

WO 2004/007627 discloses coating compositions comprising a cross-likable component and a cross-linking component. The cross-likable component is a polymer with functional groups and is polymerized from a monomer mixture comprising functional methacrylate monomers and non-functional acrylate monomers.

Thus, a continuing need still exists for a coating composition that cures under ambient conditions, more particularly those compositions having low VOC.

### Statement of the Invention

The present invention is directed to a coating composition comprising crosslinkable and crosslinking components, wherein said crosslinkable component consists of:

a copolymer having on an average 2 to 25 crosslinkable hydroxyl groups a weight average molecular weight ranging from 1000 to 4500; a polydispersity ranging from 1.05 to 2.5; wherein said copolymer is polymerized from a monomer mixture comprising one or more non-functional methacrylate monomers and one or more functional acrylate monomers provided with said functional groups,
wherein said crosslinking component for said crosslinkable groups is a polyisocyanate, and wherein said copolymer is produced by free radical polymerization of said monomer mixture at a polymerization temperature ranging from 120 °C to 300 °C.

The present invention is further directed to a process for producing a coating on a substrate, said process comprises:

a) mixing a crosslinkable and crosslinking components of a coating composition to form a potmix, wherein said crosslinkable component consists of:

a copolymer having on an average 2 to 25 crosslinkable hydroxyl groups a weight average molecular weight ranging from 1000 to 4500; a polydispersity ranging from 1.05 to 2.5; wherein said copolymer is polymerized from a monomer mixture comprising one or more non-functional methacrylate monomers arid one or more functional acrylate monomers provided with said functional groups,
wherein said crosslinking component for said crosslinkable groups is a polisocyanate, and wherein said copolymer is produced by free radical polymerization of said monomer mixture at a polymerization temperature ranging from 120 °C to 300 °C.

b) applying a layer of said potmix on said substrate;
c) curing said layer into said coating on said substrate.

## Detailed Description of the Preferred Embodiment

As used herein:

"Two-pack coating composition" means a thermoset coating composition having two components stored in separate containers. The containers containing the two components are typically sealed to increase the shelf life of the components of the coating composition. The components are mixed just prior to use to form a pot mix, which has a limited pot life, typically ranging from a few minutes (15 minutes to 45 minutes) to a few hours (4 hours to 8 hours). The pot mix is applied as a layer of a desired thickness on a substrate surface, such as an auto body. After application, the layer dries and cures at ambient or elevated temperatures to form a coating on the substrate surface having desired coating properties, such as, high gloss, mar-resistance and resistance to environmental etching.

"Low VOC coating composition" means a coating composition that includes the range of from 0.1 kilograms (1.0 pounds per gallon) to 0.72 kilograms (6.0 pounds per gallon), preferably 0.3 kilograms (2.6 pounds per gallon) to 0.6 kilograms (5.0 pounds per gallon) and more preferably 0.34 kilograms (2.8 pounds per gallon) to 0.53 kilograms (4.4 pounds per gallon) of the solvent per liter of the coating composition. All VOC's determined under the procedure provided in ASTM D3960.
"High solids composition" means a coating composition having solid component of above 30 percent, preferably in the range of from 35 to 90 percent and more preferably in the range of from 40 to 80 percent, all in weight percentages based on the total weight of the composition.
"GPC weight average molecular weight" means a weight average molecular weight measured by utilizing gel permeation chromatography. A high performance liquid chromatograph (HPLC) supplied by Hewlett-Packard, Palo Alto, California was used. Unless stated otherwise, the liquid phase used was tetrahydrofuran and the standard was polymethyl methacrylate or polystyrene.
"Tg" (glass transition temperature) measured in °C determined by DSC (Differential Scanning Calorimetry).
"Polydispersity" means GPC weight average molecular weight divided by GPC number average molecular weight. The lower the polydispersity (closer to 1), the narrower will be the molecular weight distribution, which is desired.
"(Meth)acrylate" means acrylate and methacrylate.
"Polymer solids" or "Binder solids" means a polymer or binder in its dry state.
"Crosslinkable component" means a component that includes a compound, polymer or copolymer having functional crosslinkable groups positioned in the backbone of the polymer, pendant from the backbone of the polymer, terminally positioned on the backbone of the polymer, or a combination thereof. One of ordinary skill in the art would recognize that certain crosslinkable group combinations would be excluded from the crosslinkable component of the present invention, since, if present, these combinations would crosslink among themselves (self-crosslink), thereby destroying their ability to crosslink with the crosslinking groups in the crosslinking components defined below.
"Crosslinking component" is a component that includes a compound, polymer or copolymer having crosslinking groups positioned in the backbone of the polymer, pendant from the backbone of the polymer, terminally positioned on the backbone of the polymer, or a combination thereof, wherein these groups are capable of crosslinking with the crosslinkable groups on the crosslinkable component (during the curing step) to produce a coating in the form of crosslinked structures. One of ordinary skill in the art would recognize that certain crosslinking group/crosslinkable group combinations would be excluded from present invention, since they would fail to crosslink and produce the film forming crosslinked structures.

In coating application, especially the automotive refinish application, a key driver is productivity, i.e., the ability of a layer of a coating composition to dry rapidly to a tack free state and then cure sufficiently rapidly to a buffable state. However, the productivity is adversely impacted by the increasingly stricter environmental considerations, which require coating compositions to have lower VOCs. The present invention addresses the forgoing issues by utilizing crosslinking technology. Thus, the present coating composition includes a crosslinkable and crosslinking component.

The crosslinkable component includes a copolymer having on an average 2 to 25, preferably 3 to 15, more preferably 4 to 12 crosslinkable hydroxyl groups. The weight average molecular weight of the copolymer ranges from 1000 to 4500, preferably from 1250 to 3700 and more preferably from 1500 to 3500, a polydispersity ranging from 1.05 to 2.5, preferably ranging from 1.1 to 2.0 and more preferably ranging from 1.1 to 1.7. The Tg of the copolymer can range from -10°C to 80°C, preferably from 0°C to 65°C and more preferably from 10°C to 60°C.

The copolymer is polymerized from a monomer mixture of one or more non-functional methacrylate monomers and one or more functional acrylate monomers. The ratio of the non-functional methacrylate monomers to the functional acrylate monomers in the monomer mixture ranges from about 90 : 10 :: 10 : 90, preferably from about 25 : 75 :: 75 : 25. Generally, the monomer mixture includes 100% to 60%, preferably 100% to 80% of the total amount of the non-functional methacrylate monomers and functional acrylate monomers, all percentages being in weight percent based on the weight of the monomer mixture.

The use of non-functional methacrylate monomers and functional acrylate monomers in the monomer mixture by the polymerization process described below ensures functionality on almost every copolymer chain, with low levels of non-functional chains of preferably less than 1 % and mono-functional polymer chains of preferably less than 5%, even at these low molecular weights, the percentages being based on of the total number of chains. By contrast, using the commonly practiced random polymerization techniques; the conventional copolymers at these low molecular weights would typically have unacceptable functionality distribution and contain high levels of undesirable non-functional and mono-functional polymer chains. Generally, the presence of non-functional and mono-functional polymer chains in coating compositions reduces the crosslinking of the crosslinkable functionalities with the crosslinking functionalities and results in poor coating properties, such as low crosslink density, high soluble fraction, low hardness, poor adhesion; and poor chip and humidity resistance.

More particularly, when the copolymers of the present invention have a Tg of greater than 10°C by using suitably appropriate monomers, the resulting coating composition has desirable application viscosity, reactivity and functionality in almost every polymer chain. As a result, a coating from such a composition has improved cure time and desirable coating properties, such as coating hardness. Since the presence of the copolymer in coating compositions provides a desirable balance of coating properties, much higher levels of these copolymers can be included in the coating compositions. As a result, the VOC of the resulting composition, as compared to those containing conventional reactive oligomers, can be lowered without affecting coating properties.

The non-functional methacrylate monomer can be provided with one or more groups selected from the group consisting of linear C, to $C_{20}$ alkyl, branched $C_3$ to $C_{20}$ alkyl, cyclic $C_3$ to $C_{20}$ alkyl, aromatic with 2 to 3 rings, phenyl, $C_1$ to $C_{20}$ fluorocarbon and a combination thereof. The functional acrylate monomer is provided with one or more hydroxyl groups.

Some of the one or more non-functional methacrylate monomers in the monomer mixture include methyl methacrylate, ethyl methacrylate, propyl methacrylate, butyl methacrylate, pentyl methacrylate, hexyl methacrylate, octyl methacrylate, nonyl methacrylate, isodecyl methacrylate, and lauryl methacrylate; branched alkyl monomers, such as isobutyl methacrylate, t-butyl methacrylate and 2-ethylhexyl methacrylate; and cyclic alkyl monomers, such as cyclohexyl methacrylate, methylcyclohexyl methacrylate, trimethylcyclohexyl methacrylate, tertiarybutylcyclohexyl methacrylate and isobornyl methacrylate. Isobornyl methacrylate and iso-butyl methacrylate are preferred.

Some of the specific functional acrylate monomers in the monomer mixture can include hydroxyalkyl acrylates, such as hydroxyethyl acrylate, hydroxy propyl acrylate, hydroxyisopropyl acrylate, hydroxybutyl acrylate; Hydroxyethyl acrylate and hydroxybutyl acrylate are preferred.

The monomer mixture can also further include small amounts, typically ranging from 0.01% to 10% by weight of functional methacrylate monomers provided enough functional acrylate monomers are present in the monomer mixture to ensure the presence of the afore described functionalities on each polymer chain. All percentages based on the total weight of the monomer mixture.

The monomer mixture can also further include small amounts, typically ranging from 0.01% to 10% by weight of non-functional acrylate monomers, for example butyl acrylate, provided enough functional acrylate monomers are present in the monomer mixture to ensure the presence of a functionality on each polymer chain.

The monomer mixture can also include one or more of other monomers for the purpose of achieving the desired properties, such as hardness, appearance and mar resistance. Some of the other such monomers include, for example, styrene, α-methyl styrene, acrylonitrile and methacrylonitrile. When included, preferably, the monomer mixture includes such monomers in the range of 5% to 30%, all percentages being in weight percent based on the total weight of the monomer mixture. Styrene is preferred.

If desired one or more silane functionalities can be incorporated into the copolymers of the present invention preferably by post reacting hydroxyl functionalities on the copolymer with isocyanatopropyl trimethoxy silane. The reaction is conducted on an equivalent basis with equivalents of isocyanate, from the isocyanatopropyl trimethoxy silane, to hydroxyl groups, on the copolymer, ranging from 0.01 to 1.0.

The processes of producing the copolymer of the present invention is free radically solution polymerizing the aforedescribed monomer mixture at a polymerization temperature ranging from 120°C to 300°C, preferably ranging from 150°C to 200°C and more preferably ranging from 160°C to 200°C. Typically the reactor gage pressure ranges from 0.1 to 2.86 MPa (0 to 400 psig), preferably from 0.1 to 0.71 MPa (0 to 100 psig). It is understood that the higher the polymerization temperature, the higher will be the reactor pressure for a given composition of monomers and solvent. Typically, the monomer mixture is solvated in a polymerization medium, which typically includes one or more organic solvents, such as methyl amyl ketone, Aromatic 100 from ExxonMobil Chemical, Houston, Texas and butyl acetate. Thus, the higher the boiling point of the polymerization medium, the higher can be the polymerization temperature. Typical reaction time ranges from about 1 hour to 6 hours, generally from about 2 hours to 4 hours.

The polymerization of the monomer mixture can be initiated by preferably simultaneously adding conventional thermal initiators, such as Azos exemplified by Vazo® 64 supplied by DuPont Company, Wilmington, Delaware; and peroxides, such as t-butylperoxy acetate. By adjusting the amount of initiator used and the reaction temperature, the molecular weight of the resulting copolymer of the present invention can be adjusted. Thus, to attain the same molecular weight, the lower the polymerization temperature, the more will be the amount of the initiator needed. Typically, to attain the claimed molecular weight range, at high polymerization temperatures (higher than 150°C) about 0.1 % to about 6% of initiator is used, all percentages being in weight percent based on the weight of the monomer mixture. Conversely, at low polymerization temperatures (lower than 150°C) about 4% to about 12% of initiator is used, all percentages being in weight percent based on the weight of the monomer mixture. Another approach to lowering the molecular weight of the copolymer includes polymerizing the monomer mixture under very dilute conditions. Thus, using the same amount of the initiator, a copolymer made at 70 weight percent solids will have higher molecular weight than a copolymer made at 10 to 20 weight percent solids.

The crosslinking component of the present invention suitable for crosslinking with the crosslinkable groups present in the copolymer in the crosslinking component is a polyisocyanate. It would be clear to one ordinary skill in the art that generally certain combinations of crosslinking groups from crosslinking components crosslink with crosslinkable groups from the crosslinkable components.

Typically, the polyisocyanate is provided with in the range of 2 to 10, preferably 2.5 to 8, more preferably 3 to 5 isocyanate functionalities. Generally, the ratio of equivalents of isocyanate functionalities on the polyisocyanate per equivalent of the functional group of the copolymer ranges from 0.5/1 to 3.0/1, preferably from 0.7/1 to 1.8/1, more preferably from 0.8/1 to 1.3/1. Some suitable polyisocyanates include aromatic, aliphatic, or cycloaliphatic polyisocyanates, trifunctional polyisocyanates and isocyanate functional adducts of a polyol and difunctional isocyanates. Some of the particular polyisocyanates include diisocyanates, such as 1,6-hexamethylene diisocyanate, isophorone diisocyanate, 4,4'-biphenylene diisocyanate, toluene diisocyanate, biscyclohexyl diisocyanate, tetramethyl-m- xylylene diisocyanate, ethyl ethylene diisocyanate, 1-methyltrimethylene diisocyanate, 1,3-phenylene diisocyanate, 1,5-napthalene diisocyanate, bis-(4-isocyanatocyclohexyl)-methane and 4,4'-diisocyanatodiphenyl ether.

Some of the suitable trifunctional polyisocyanates include triphenylmethane triisocyanate, 1,3,5-benzene triisocyanate, and 2,4,6-toluene triisocyanate, Trimers of diisocyanate, such as the trimer of hexamethylene diisocyanate sold under the trademark Desmodur®N-3390 by Bayer Corporation of Pittsburgh, Pennsylvania and the trimer of isophorone diisocyanate are also suitable. Furthermore, trifunctional adducts of triols and diisocyanates are also suitable. Trimers of diisocyanates are preferred and trimers of isophorone and hexamethylene diisocyanates are more preferred.

The coating composition preferably includes a catalytic amount of a catalyst for accelerating the curing process. Generally, in the range of about 0.001 percent to about 5 percent, preferably in the range of from 0.005 percent to 2 percent, more preferably in the range of from 0.01 percent to 1 percent of the catalyst is utilized, all in weight percent based on the total weight of crosslinkable and crosslinking component solids. A wide variety of catalysts can be used, such as, tin compounds, including dibutyl tin dilaurate and dibutyl tin diacetate; tertiary amines, such as, triethylenediamine. These catalysts can be used alone or in conjunction with carboxylic acids, such as, acetic acid. One of the commercially available catalysts, sold under the trademark, Fastcat® 4202 dibutyl tin dilaurate by Elf-Atochem North America, Inc. Philadelphia, Pennsylvania, is particularly suitable.

The crosslinkable component of the present invention can be blended with reactive oligomers covered in US 6,221,494, and non-alicyclic (linear or aromatic) oligomers, if desired. Such non-alicyclic-oligomers can be made by using non-alicyclic anhydrides, such as succinic or phthalic anhydrides, or mixtures thereof. Caprolactone oligomers described in US 5,286,782, can also be used.

The coating composition of the present invention can optionally contain, in the range of from 0.1 percent to 50 percent, a modifying resin, such as non-aqueous dispersion (NAD), all percentages being based on the total weight of composition solids. The weight average molecular weight of the modifying resin generally varies in the range of from 20,000 to 100,000, preferably in the range of from 25,000 to 80,000 and more preferably in the range from 30,000 to 50,000.

The non-aqueous dispersion-type polymer is prepared by dispersion polymerizing at least one vinyl monomer in the presence of a polymer dispersion stabilizer and an organic solvent. The polymer dispersion stabilizer may be any of the known stabilizers used commonly in the field of non-aqueous dispersions.

The crosslinkable or crosslinking component of coating composition of the present invention, typically contains at least one organic solvent which is typically selected from the group consisting of aromatic hydrocarbons, such as, petroleum naphtha or xylenes; ketones, such as, methyl amyl ketone, methyl isobutyl ketone, methyl ethyl ketone or acetone; esters, such as, butyl acetate or hexyl acetate; and glycol ether esters, such as propylene glycol monomethyl ether acetate. The amount of organic solvent added depends upon the desired solids level as well as the desired amount of VOC of the composition. If desired, the organic solvent may be added to both components of the binder. High solids and low VOC coating composition is preferred.

The coating composition of the present invention can also contain conventional additives, such as, pigments, metallic flakes, hollow glass beads, UV absorbers, stabilizers, rheology control agents, flow agents, reinforcing fibers, toughening agents and fillers. Such additional additives will, of course, depend upon the intended use of the coating composition. Fillers, pigments, and other additives that would adversely affect the clarity of the cured coating are typically not included if the composition is intended as a clear coating. It is understood that one or more of these conventional additives, such as pigments, can be added before, during or at the end of the agitating step.

To improve weatherability of the coating from the coating composition, about 0.1 to 5% by weight, based on the weight of the composition solids, of an ultraviolet light stabilizer or a combination of ultraviolet light stabilizers and absorbers may be added. These stabilizers include ultraviolet light absorbers, screeners, quenchers and specific hindered amine light stabilizers. Also, about 0.1 to 5% by weight, based on the weight of the composition solids, of an antioxidant can be added. Most of the foregoing stabilizers are supplied by Ciba Specialty Chemicals, Tarrytown, New York.

The coating composition of the present invention can be formulated in the form of a clear coating composition, pigmented composition, metallized coating composition, basecoat composition, monocoat composition or a primer. The present formulations are particularly useful as a clear coating for outdoor articles, such as automobile and other vehicle body parts. The substrate is generally prepared with a primer and or a color coat or other surface preparation prior to coating with the present compositions.

The present invention is also directed to a method of producing a coating on a substrate. The coating composition of the present invention can be supplied in the form of a two-pack coating composition. Generally, the crosslinkable component and the crosslinking component are mixed; typically just prior to application to form a pot mix. The mixing can take place though a conventional mixing nozzle or separately in a container. A layer of the pot mix generally having a thickness in the range of 15 micrometers to 200 micrometers is applied over a substrate, such as an automotive body or an automotive body that has precoated layers, such as electrocoat primer. The foregoing application step can be conventionally accomplished by spraying, electrostatic spraying, roller coating, dipping or brushing the pot mix over the substrate. The layer after application is typically dried to reduce the solvent content from the layer and then cured at temperature ranging from ambient to 204°C. Under typical automotive OEM applications, the dried layer of the composition can be typically cured at elevated temperatures ranging from 60°C to 160°C in about 10 to 60 minutes. Preferably, for automotive refinish applications curing can take place at about ambient to 60°C, and for heavy-duty truck body applications it can take place at about 60°C to 80°C. The cure under ambient conditions occurs in about 30 minutes to 24 hours, generally in about 30 minutes to 4 hours to form a coating on the substrate having the desired coating properties. It is further understood that the actual curing time can depend upon the thickness of the applied layer, the cure temperature, humidity and on any additional mechanical aids, such as fans, that assist in continuously flowing air over the coated substrate to accelerate the cure rate. It is understood that actual curing temperature would vary depending upon the catalyst and the amount thereof, thickness of the layer being cured and the amount of the crosslinking component utilized.

The suitable substrates for applying the coating composition of the present invention include automobile bodies, any and all items manufactured and painted by automobile sub-suppliers, frame rails, commercial trucks and truck bodies, including but not limited to beverage bodies, utility bodies, ready mix concrete delivery vehicle bodies, waste hauling vehicle bodies, and fire and emergency vehicle bodies, as well as any potential attachments or components to such truck bodies, buses, farm and construction equipment, truck caps and covers, commercial trailers, consumer trailers, recreational vehicles, including but not limited to, motor homes, campers, conversion vans, vans, pleasure vehicles, pleasure craft snow mobiles, all terrain vehicles, personal watercraft, bicycles, motorcycles, boats, and aircraft. The substrate further includes industrial and commercial new construction and maintenance thereof; cement and wood floors; walls of commercial and residential structures, such office buildings and homes; amusement park equipment; concrete surfaces, such as parking lots and drive ways; asphalt and concrete road surface, wood substrates, marine surfaces; outdoor structures, such as bridges, towers; coil coating; railroad cars; printed circuit boards; machinery; OEM tools; signage; fiberglass structures; sporting goods; and sporting equipment.

## Examples

## Test Procedures

### Swell Ratio

The swell ratio of a free film (removed from a sheet of TPO-thermoplastic olefin) was determined by swelling the film in methylene chloride. The free film was placed between two layers of aluminum foil and using a LADD punch, a disc of about 3.5 mm in diameter was punched out of the film and the foil was removed from the film. The diameter of the unswollen film (Do) was measured using a microscope with a 10x magnification and a filar lens. Four drops of methylene chloride were added to the film and the film was allowed to swell for a few seconds and then a glass slide was placed over the film and the swollen film diameter ($D_s$) was measured. The swell ratio was then calculated as follow:

$$\text{Swell ratio} = (D_s)^2/(D_o)^2$$

The lower the swell ratio, the higher is the crosslink density.

### Persoz Hardness Test

The change in film hardness of the coating was measured with respect to time by using a Persoz hardness tester Model No. 5854 (ASTM D4366), supplied by Byk-Mallinckrodt, Wallingford, CT. The numbers of oscillations (referred to as Persoz number) were recorded.

### Hardness (Fischer)

Hardness was measured using a Fischerscope® hardness tester (the measurement is in Newtons per square millimeter).

### Cotton Tack Free Time

Allow coated panel to dry for set period of time (e.g. 30 minutes). Drop a cotton ball from a height of 1 inch onto the surface of the panel and leave the cotton ball on the surface for a set time interval and invert panel. Repeat above until the time the cotton ball drops off the panel on inversion and note that as the cotton tack free time.

### BK Dry Time

Surface drying times of coated panels measured according to ASTM D5895.

### Gel Fraction

Measured according to the procedure set forth in US Patent 6,221,494, column 8, line 56 to column 9, line 2, which procedure is hereby incorporated by reference.

### MEK Rubs

A coated panel is rubbed (100 times) with an MEK (methyl ethyl ketone) soaked cloth using a rubbing machine and any excess MEK is wiped off. The panel is rated from 1-10. Rating 10-no visible damage to the coating, rating 9-1-3 distinct scratches, rating 8-4-6 distinct scratches, rating 7-7-10 distinct scratches, rating 6-10-15 distinct scratches with slight pitting or slight loss of color, rating 5 - 15-20 distinct scratches with slight to moderate pitting or moderate loss of color, rating 4 - scratches start to blend into one another, rating 3 - only a few undamaged areas between blended scratches, rating 2 - no visible signs of undamaged paint, rating 1 complete failure - bare spots are shown. The final rating is obtained by multiplying the number of rubs by the rating.

**Water Spot Test**

Water spot rating is a measure of how well the film is crosslinked early in the curing of the film. If water spot damage is formed on the film, this is an indication that the cure is not complete and further curing of the film is needed before the film can be wet sanded or buffed or moved from the spray both. The water spot rating is determined in the following manner.

Coated panels are laid on a flat surface and deionized water was applied with a pipette at 1 hour-timed intervals. A drop about ½ inch in diameter was placed on the panel and allowed to evaporate. The spot on the panel was checked for deformation and discoloration. The panel was wiped lightly with cheesecloth wetted with deionized water, which was followed by lightly wiping the panel dry with the cloth. The panel was then rated on a scale of 1 to 10. Rating of 10 best - no evidence of spotting or distortion of discoloration, rating 9 - barely detectable, rating 8- slight ring, rating 7 - very slight discoloration or slight distortion, rating 6 - slight loss of gloss or slight discoloration, rating 5 - definite loss of gloss or discoloration, rating of 4 - slight etching or definite distortion, rating of 3 - light lifting, bad etching or discoloration, rating of 2 - definite lifting and rating of 1 - dissolving of the film.

**Copolymer 1**

To a 1-liter flask fitted with heating mantle, stirrer, monomer and initiator feed lines, an initial solvent charge of 268.4 grams of xylene was added. The solvent was heated to 190°C under 2.5 bar pressure. A monomer mixture (IBMA/HEA 70/30) of 2489.9 g of isobutyl methacrylate (IBMA from Lucite International, Inc. Cordova, Tennessee), 1067.1 g of hydroxyl ethyl acrylate (Rorcryl 420® HEA from Rohm and Haas, Philadelphia, Pennsylvania) and 33.3 g of xylene as solvent was added to the flask over a period of 240 minutes in such a way that the level in the 1-liter flask was held constant at 0.55 liters and the reactor effluent was fed to an attached 12 liter flask fitted with heating mantle, stirrer, water cooled condenser with nitrogen purge and initiator feed line. Simultaneously with the monomer feed, a mixture of 14.5g of tert-butylperoxy acetate (Luperox® 7M75 initiator from Atofina, Philadelphia, Pennsylvania) and 803.4g of xylene was added over a period of 240 minutes. Polymerization temperature of 190°C was maintained over the entire reaction time. After completion of the feeds to the 1-liter flask, the flask was drained over 25 minutes into the 12-liter flask. Once transfer from the 1-liter flask to the 12-liter flask began, the 12-liter flask was heated to reflux at 140°C. Thirty-four minutes after the transfer from the 1-liter flask to the 12-liter flask began, 1.9g of tert-butyl peroxy acetate (Luperox® 7M75 initiator from Atofina, Philadelphia, Pennsylvania) and 12.0g of xylene were added all at once to the 12-liter flask. Directly thereafter, 17.5g of tert-butyl peroxy acetate (Luperox® 7M75 initiator from Atofina, Philadelphia, Pennsylvania) and 108.4g of xylene were fed to the 12-liter reactor over 220 minutes. Once the initiator feed was complete, an additional 19.4g of Luperox® 7M75 initiator and 139.1 g of xylene were fed over half an hour. The 12-liter flask was held at reflux for 1 hour and cooled to 80°C. An additional 84.6g of xylene were added to the 12-liter flask and the batch filled out.

The resulting copolymer@ 65.3 % solids had a GPC Mn of 2099 and GPC Mw of 2991. The copolymer had an average number of 2.6 hydroxyl groups from the hydroxy ethyl acrylate per polymer chain. The Tg of the copolymer was -16.5°C, using dynamic scanning calorimetry.

**Copolymer 2**

To a 1-liter flask fitted with heating mantle, stirrer, monomer and initiator feed lines, an initial solvent charge of 268.4 grams of xylene was added. The solvent was heated to 190°C under 2.5 bar pressure. A monomer mixture (IBOMA/IBMA/HEA 35/35/30) of 1244.9g of isobornyl methacrylate (AGEFLEX® IBOMA from CIBA Specialty Chemicals, High Point, NC), 1244.9g of isobutyl methacrylate (IBMA from Lucite International, Inc. Cordova, Tennessee), 1067.1 g of hydroxy ethyl acrylate (Rorcryl 420® HEA from Rohm and Haas, Philadelphia, Pennsylvania) and 33.3 g of xylene as solvent was added to the flask over a period of 240 minutes in such a way that the level in the 1-liter flask was held constant at 0.55 liters and the reactor effluent was fed to an attached 12 liter flask fitted with heating mantle, stirrer, water cooled condenser with nitrogen purge and initiator feed line. Simultaneously with the monomer feed, a mixture of 14.5g of tert-butylperoxy acetate (Luperox® 7M75 initiator from Atofina, Philadelphia, Pennsylvania) and 803.4g of xylene was added over a period of 240 minutes. Polymerization temperature of 190°C was maintained over the entire reaction time. After completion of the feeds to the 1-liter flask, the flask was drained over 25 minutes into the 12-liter flask. Once transfer from the 1-liter flask to the 12-liter flask began, the 12-liter flask was heated to reflux at 140°C. Thirty-four minutes after the transfer from the 1-liter flask to the 12-liter flask began, 1.9g of tert-butylperoxy acetate (Luperox® 7M75 initiator from Atofina, Philadelphia, Pennsylvania) and 12.0g of xylene were added all at once to the 12-liter flask. Directly thereafter, 17.5g of tert-butylperoxy acetate (Luperox® 7M75 initiator from Atofina, Philadelphia, Pennsylvania) and 108.4g of xylene were fed to the 12-liter reactor over 220 minutes. Once the initiator feed was complete, an additional 19.4g of Luperox® 7M75 initiator and 139.1g of xylene were fed over half an hour. The 12-liter flask was held at reflux for 1 hour and cooled to 80°C. An additional 84.6g of xylene were added to the 12-liter flask and the batch filled out.

The resulting copolymer@ 65.3 % solids had a GPC Mn of 1986 and GPC Mw of 2735. The copolymer had an average number of 2.6 hydroxyl groups from the hydroxyethyl acrylate per polymer chain. The Tg of the copolymer was 5.0°C, using dynamic scanning calorimetry.

**Copolymer 3**

To a 1-liter flask fitted with heating mantle, stirrer, monomer and initiator feed lines, an initial solvent charge of 268.4 grams of xylene was added. The solvent was heated to 175°C under 2.5 bar pressure. A monomer mixture (IBOMA/HEA 70/30) of 2489.8g of isobornyl methacrylate (AGEFLEX® IBOMA from CIBA Specialty Chemicals, High Point, NC) and 1067.1 g of hydroxy ethyl acrylate (Rorcryl 420® HEA from Rohm and Haas, Philadelphia, Pennsylvania) and 33.3 g of xylene as solvent was added to the flask over a period of 240 minutes in such a way that the level in the 1-liter flask was held constant at 0.55 liters and the reactor effluent was fed to an attached 12 liter flask fitted with heating mantle, stirrer, water cooled condenser with nitrogen purge and initiator feed line. Simultaneously with the monomer feed, a mixture of 14.5g of tert-butylperoxy acetate (Luperox® 7M75 initiator from Atofina, Philadelphia, Pennsylvania) and 803.4g of xylene was added over a period of 240 minutes. Polymerization temperature of 190°C was maintained over the entire reaction time. After completion of the feeds to the 1-liter flask, the flask was drained over 25 minutes into the 12-liter flask. Once transfer from the 1-liter flask to the 12-liter flask began, the 12-liter flask was heated to reflux at 140 °C. Thirty-four minutes after the transfer from the 1-liter flask to the 12-liter flask began, 1.9g of tert-butylperoxy acetate (Luperox® 7M75 initiator from Atofina, Philadelphia, Pennsylvania) and 12.0g of xylene were added all at once to the 12-liter flask. Directly thereafter, 17.5g of tert-butylperoxy acetate (Luperox® 7M75 initiator from Atofina, Philadelphia, Pennsylvania) and 108.4g of xylene were fed to the 12-liter reactor over 220 minutes. Once the initiator feed was complete, an additional 19.4g of Luperox® 7M75 initiator and 139.1 g of xylene were fed over half an hour. The 12-liter flask was held at reflux for 1 hour and cooled to 80 °C. An additional 84.6g of xylene were added to the 12-liter flask and the batch filled out.

The resulting copolymer@ 65.6 % solids had a GPC Mn of 1935 and GPC Mw of 2656. The copolymer had an average number of 2.6 functional groups of hydroxyethyl acrylate per polymer chain. The Tg of the copolymer was 38.6°C, using dynamic scanning calorimetry.

**Copolymer 4**

To a 1-liter flask fitted with heating mantle, stirrer, monomer and initiator feed lines, an initial solvent charge of 268.4 grams of xylene was added. The solvent was heated to 175°C under 2.5 bar pressure. A monomer mixture (MMA/HEA 70/30) of 2489.8g of methyl methacrylate (MMA from Lucite International, Inc. Cordova, Tennessee), 1067.1 g of hydroxy ethyl acrylate (Rorcryl 420® HEA from Rohm and Haas, Philadelphia, Pennsylvania) and 33.3 g of xylene as solvent was added to the flask over a period of 240 minutes in such a way that the level in the 1-liter flask was held constant at 0.55 liters and the reactor effluent was fed to an attached 12 liter flask fitted with heating mantle, stirrer, water cooled condenser with nitrogen purge and initiator feed line. Simultaneously with the monomer feed, a mixture of 14.5g of tert-butylperoxy acetate (Luperox® 7M75 initiator from Atofina, Philadelphia, Pennsylvania) and 803.4g of xylene was added over a period of 240 minutes. Polymerization temperature of 190°C was maintained over the entire reaction time. After completion of the feeds to the 1-liter flask, the flask was drained over 25 minutes into the 12-liter flask. Once transfer from the 1-liter flask to the 12-liter flask began, the 12-liter flask was heated to reflux at 140 °C. Thirty-four minutes after the transfer from the 1-liter flask to the 12-liter flask began, 1.9g of tert-butylperoxy acetate (Luperox® 7M75 initiator from Atofina, Philadelphia, Pennsylvania) and 12.0g of xylene were added all at once to the 12-liter flask. Directly thereafter, 17.5g of tert-butylperoxy acetate (Luperox® 7M75 initiator from Atofina, Philadelphia, Pennsylvania) and 108.4g of xylene were fed to the 12-liter reactor over 220 minutes. Once the initiator feed was complete, an additional 19.4g of Luperox® 7M75 initiator and 139.1 g of xylene were fed over half an hour. The 12-liter flask was held at reflux for 1 hour and cooled to 80 °C. An additional 84.6g of xylene were added to the 12-liter flask and the batch filled out.

The resulting copolymer@ 65.7 % solids had a GPC Mn of 2683 and GPC Mw of 4198. The copolymer had an average number of 2.6 functional groups of hydroxyethyl acrylate per polymer chain. The Tg of the copolymer was 27.1 °C, using dynamic scanning calorimetry.

**Copolymer 5**

To a 1-liter flask fitted with heating mantle, stirrer, monomer and initiator feed lines, an initial solvent charge of 268.4 grams of xylene was added. The solvent was heated to 185°C under 3.5 bar pressure. A monomer mixture (MMA/HEA 70/30) of 2489.8g of methyl methacrylate (MMA from Lucite International, Inc. Cordova, Tennessee), 1067.1 g of hydroxy ethyl acrylate (Rorcryl 420® HEA from Rohm and Haas, Philadelphia, Pennsylvania) and 33.3 g of xylene as solvent was added to the flask over a period of 240 minutes in such a way that the level in the 1-liter flask was held constant at 0.55 liters and the reactor effluent was fed to an attached 12 liter flask fitted with heating mantle, stirrer, water cooled condenser with nitrogen purge and initiator feed line. Simultaneously with the monomer feed, a mixture of 14.5g of tert-butylperoxy acetate (Luperox® 7M75 initiator from Atofina, Philadelphia, Pennsylvania) and 803.4g of xylene was added over a period of 240 minutes. Polymerization temperature of 190°C was maintained over the entire reaction time. After completion of the feeds to the 1-liter flask, the flask was drained over 25 minutes into the 12-liter flask. Once transfer from the 1-liter flask to the 12-liter flask began, the 12-liter flask was heated to reflux at 140 °C. Thirty-four minutes after the transfer from the 1-liter flask to the 12-liter flask began, 1.9g of tert-butylperoxy acetate (Luperox® 7M75 initiator from Atofina, Philadelphia, Pennsylvania) and 12.0g of xylene were added all at once to the 12-liter flask. Directly thereafter, 17.5g of tert-butylperoxy acetate (Luperox® 7M75 initiator from Atofina, Philadelphia, Pennsylvania) and 108.4g of xylene were fed to the 12-liter reactor over 220 minutes. Once the initiator feed was complete, an additional 19.4g of Luperox® 7M75 initiator and 139.1 g of xylene were fed over half an hour. The 12-liter flask was held at reflux for 1 hour and cooled to 80 °C. An additional 84.6g of xylene were added to the 12-liter flask and the batch filled out.

The resulting copolymer@ 64.7 % solids had a GPC Mn of 2683 and GPC Mw of 3386. The copolymer had an average number of 2.6 hydroxyl groups from the hydroxyethyl acrylate per polymer chain. The Tg of the copolymer was 25.6°C, using dynamic scanning calorimetry.

**Comparative Copolymer 1 (Comp. Copolymer 1)**

To a five-liter flask fitted with heating mantle, stirrer, condenser with 50ml moisture receiver, nitrogen blanket, monomer and initiator feed lines, enough solvent (Aromatic 100 from ExxonMobil Chemical Chemical, Houston, Texas) was added to completely fill the receiver. Then, 300.1g of solvent (Aromatic 100) was added to the reaction flask and the flask was heated to reflux, followed by the addition of a monomer mixture consisting of 551.1 g of hydroxyethylmethacrylate (Rocryl® 400 monomer from Rohm and Haas Company, Philadelphia, Pennsylvania) and 945g isobornyl acrylate (Sipomer® HP from Rhodia Inc., Cranbury, New Jersey) over a period of 240 minutes to the flask. Simultaneously with the monomer feed, an initiator feed consisting of 45g of tertiarybutyl peroxyacetate (Luperox® 7M75 from Atofina, Philadelphia, Pennsylvania) and 250.1 g of Aromatic 100 was added over a period of 270 minutes. Reflux at a temperature of approximately 169°C was maintained over the entire reaction time. After completion of the initiator feed, the flask was cooled to 150°C and 250.2g of methyl N-amyl ketone (PM133 from Eastman Chemical, Kingsport, Tennessee) was added. The flask was further cooled to less than 80°C and the contents poured out. The resulting copolymer (HEMA/IBOA//37/63) was at 70% solids, with a GPC Mn of 1637, and GPC Mw of 2978 using polystyrene as the standard. The average number of functionalities (hydroxyl) was 4.6 per polymer chain and the Tg of the copolymer was 41.05°C.

**Comparative Copolymer 2 (Comp. Copolymer 2)**

To a 2-liter flask fitted with an agitator, water condenser, thermocouple, nitrogen inlet, heating mantle, and addition pumps and ports was added 305.3g of xylene, which was agitated and heated to reflux temperature (137 to 142°C). A monomer mixture comprising of 106.1 grams styrene, 141.4 grams methyl methacrylate, 318.3 grams isobutyl methacrylate, 141.4 grams hydroxyethyl methacrylate and 10.4g xylene was then added to the flask via the addition pumps and ports simultaneously with an initiator mixture comprising 17.0 grams t-butyl peracetate and 85.2g xylene. The monomer mixture was added over 180 minutes and the addition time for the initiator mixture was also 180 minutes. The batch was held at reflux (137°C to 142°C) throughout the polymerization process. An initiator mixture comprising of 4.3g t-butyl peracetate and 57.8g of methyl ethyl ketone was then immediately added to the reaction mixture over 60 minutes and the batch was subsequently held at reflux for 60 minutes. The batch was then cooled to below 90°C and 13.0g of methyl ethyl ketone were added. The resulting polymer solution has weight solids of 60% and viscosity of 14,400 cps. The number average molecular weight of the resulting hydroxy functional acrylic copolymer was 5,000 and weight average molecular weight was 11,000, as determined by gel permeation chromatography (polystyrene standard).

Clear coating composition of the invention (Examples 1 through 5 and Comparative Examples 1 and 2) were prepared by adding the components listed in Table 1 below (all in parts by weight):

**Table 1**

| Composition Components | Ex.1 | Ex. 2 | Ex. 3 | Comp. Ex. 1 | Comp. Ex. 2 |
|---|---|---|---|---|---|
| **Crosslinkable Component** | | | | | |
| Copolymer 3 | 43.71 | | | | |
| Copolymer 4 | | 43.63 | | | |
| Copolymer 5 | | | 44.32 | | |

(continued)

| Composition Components | Ex.1 | Ex. 2 | Ex. 3 | Comp. Ex. 1 | Comp. Ex. 2 |
|---|---|---|---|---|---|
| **Crosslinkable Component** | | | | | |
| Comp. Compound 1* | | | | 22.39 | |
| Comp. Copolymer 1 | | | | | 36.83 |
| Solvent (butyl Acetate) | 4.61 | 4.69 | 3.69 | 11.39 | 7.93 |
| Flow Additive** | 0.58 | 0.58 | 0.59 | 0.32 | 0.51 |
| Catalyst*** | 2.90 | 2.90 | 2.93 | 1.62 | 2.56 |
| **Crosslinking Component** | | | | | |
| Tolonate® HDT -LV (Isocyanurate Trimer of Hexamethylene Diisocyanate)**** | 14.27 | 14.27 | 14.27 | 14.27 | 14.27 |
| * Comp. Copolymer (Reactive oligomer based on procedure # 2 in US 6,221,494 B1) @ 80% weight solids in Methyl Amyl Ketone.<br>** 10% BYK® 301 Flow Additive from BYK-Chemie, Wallingford, Connecticut in propylene glycol monomethyl ether acetate.<br>*** 1% Di Butyl Tin Dilaurate in Methyl Ethyl Ketone.<br>**** Supplied by Rhodia Chemicals, Inc., Cranbury, New Jersey. | | | | | |

The crosslinkable and crosslinking components listed in Table 1 above were mixed to form pot mixes, which were applied with a doctor blade over a separate phosphated cold roll steel panels primed with a layer of PowerCron® Primer supplied by PPG, Pittsburgh, Pennsylvania, to a dry coating thickness of 50 micrometers and air dried at ambient temperature conditions. Then the panels were tested using the tests set forth in following Table 2, which also includes the test results:

**Table 2**

| | Comp. Ex. 1 PE/MH/EO | Comp. Ex. 2 IBOA/HEMA | Ex 1. IBOMA/HEA | Ex. 2 MMA/HEA | Ex. 3 MMA/HEA |
|---|---|---|---|---|---|
| Properties & Tests | 964 | 70/30 | 70/30 | 70/30 | 70/30 |
| GPC Mn | 1054 | 1684 | 1935 | 2683 | 2683 |
| GPC Mw | 4.6 | 2893 | 2656 | 4198 | 3386 |
| Tg | 60 | 43.3 | 38. 6 | 27.1 | 25.6 |
| Viscosity @ 60% Theoretical Solids (cps) | 242 | 200 | 135 | 710 | 450 |
| Equivalent Weight | 55 | 433 | 396 | 394 | 320 |
| Pot Life in minutes | 385 | 95 | 94 | 76 | 85 |
| BK3 Time in minutes | 255 | 231 | 111 | 83 | 83 |
| Cotton Tack Free Time in minutes | | 255 | 240 | 180 | 262 |

(continued)

| | Comp. Ex. 1 PE/MH/EO | Comp. Ex. 2 IBOA/HEMA | Ex 1. IBOMA/HEA | Ex. 2 MMA/HEA | Ex. 3 MMA/HEA |
|---|---|---|---|---|---|
| Persoz Hardness (pz) 4 Hours @ Room Temp. | 16 | 41 | 24 | 24 | 26 |
| 1 day @ Room Temp. | 123 | 178 | 145 | 105 | 113 |
| Visual Appearance | Good | Goo d | Goo d | Goo d | Good |
| **Fisher Hardness (FI)** | | | | | |
| 1 day | 15.8 | 19 | 28 | 23 | 27 |
| 30 days | 59 | 172 | 115 | 75 | 82 |
| 30 days @ 3 mil | 58 | 82 | 68 | 18 | 15 |
| Water Spot Test-4 hours @ Room Temp. | 7 | 8 | 8 | 9 | 8 |
| **Swell Ratio** | | | | | |
| 1 day | 1.99 | 1.83 | 1.86 | 1.63 | 1.68 |
| 30 days | 1.61 | 1.63 | 1.58 | 1.57 | 1.65 |
| Gel Fraction-30 day @ Room Temp. | 99.9 | 94.4 | 91.1 | 92.3 | 91.6 |
| * The viscosity of copolymers. | | | | | |

In general the results of Table 2 show that the properties of Examples 1, 2 and 3 are comparable to the properties of Comparative Example 2. However, the results of Table 2 show that the properties of Examples 1, 2 and 3 show improved coating properties over that of Comparative Example 1.

The improved coating hardness and coating cure times provided by the coating compositions of the present invention over those provided by the coating compositions using functional oligomer Comparative Compound 1 will permit refinish body shops to sand and buff the clearcoats much earlier, thereby improving the body shop productivity. Moreover, these improved properties also allow a refinish formulator to include higher amounts of these copolymers in refinish coating compositions, thereby reducing the VOC in the resulting coating compositions without adversely affecting the coating properties.

**Viscosity Test comparison**

Copolymers 3, 4, 5 and Comparative Copolymer 2 were reduced to 60% weight solids with a solvent blend of 80% Methyl amyl Ketone and 20% Methyl ethyl ketone. The results, shown in the Table 2, indicate that the viscosities of copolymers 1, 2 and 3 are much lower than those of a conventional acrylic copolymer, such as Comparative Copolymer 2, which had a viscosity at 60% solids of 14,400 cps.

Thus, it is clearly seen from the property and viscosity data of the copolymers of the present invention and the coating compositions made therefrom that these types of copolymers offer a significant advantage in lowering VOC as compared to conventional acrylic copolymers. Furthermore, the copolymers of the present invention also provide favorable film forming properties (early and final) when compared against the oligomers such as those described in # US 6,221,494 B1.

**Claims**

1. A coating composition comprising crosslinkable and crosslinking components, wherein said crosslinkable component consists of a copolymer having on an average 2 to 25 crosslinkable hydroxyl groups, a weight average molecular weight (measured by GPC) ranging from 1000 to 4500; a polydispersity ranging from 1.05 to 2.5; wherein said copolymer is polymerized from a monomer mixture comprising one or more non-functional methacrylate monomers and one or more functional acrylate monomers provided with said functional groups, wherein said crosslinking component for said crosslinkable groups is a polyisocyanate, and wherein said copolymer is produced by free radical polymerization of said monomer mixture at a polymerization temperature ranging from 120°C to 300°C.

2. The coating composition of claim 1, wherein said non-functional methacrylate monomer is provided with a non-functional group selected from the group consisting of linear $C_1$ to $C_{20}$ alkyl, branched $C_3$ to $C_{20}$ alkyl, cyclic $C_3$ to $C_{20}$ alkyl, aromatic with 2 to 3 rings, phenyl and $C_1$ to $C_{20}$ fluorocarbon.

3. The coating composition of claim 1, wherein said copolymer has a Tg (glass transition temperature measured in °C determined by DSC (Differential Scanning Colorimetry)) ranging from -10°C to 80°C.

4. The coating composition of claim 1, wherein said composition has a VOC (determined under the procedure provided in ASTM D3960) ranging from 0.1 kilograms to 0.72 kilograms per liter.

5. The coating composition of claim 1, wherein said polyisocyanate is provided within the range of 2 to 10 isocyanate functionalities.

6. The coating composition of claim 1, wherein said crosslinkable component further comprises a catalyst selected from the group consisting of a tin compound, tertiary amine, acid catalyst and a combination thereof.

7. The coating composition of claim 1, wherein said composition is a clear coating composition, pigmented composition, metallized coating composition, basecoat composition, monocoat composition or a primer.

8. The coating composition of claim 1, wherein said monomer mixture further comprises acid monomers.

9. The coating composition of claim 1, wherein said copolymer is provided with silane functionalities by post reacting said copolymer having said hydroxyl functionalities with isocyanatopropyl trimethoxy silane.

10. The coating composition of claim 1, wherein said monomer mixture further comprises 0.01% to 10% by weight of functional acrylate monomers.

11. The coating composition of claim 1, wherein said monomer mixture further comprises 0.01% to 10% by weight of non-functional methacrylate monomers.

12. The coating composition of claim 1, wherein said crosslinkable component further comprises 0.1 weight percent to 95 weight percent based on the total weight of the crosslinkable component of an acrylic polymer, a polyester, reactive oligomer, non-alicylic oligomer or a combination thereof.

13. The coating composition of claim 1, wherein said crosslinkable component further comprises 0.1 to 50 weight percent of a dispersed acrylic monomer, the percentage being based on the total weight of the composition solids.

14. The coating composition of claim 1, further comprises an aldimine, polyaspartic ester or a combination thereof.

15. The coating composition of claim 13, wherein a ratio of said non-functional methacrylate monomers to said functional acrylate monomers in said mixture ranges from 90 : 10 to 10: 90.

16. The coating composition of claim 15, wherein total amount of said non-functional methacrylate monomers and said functional acrylate monomers in said monomer mixture ranges from 100 percent to 60 percent based on the total weight of said monomer mixture.

17. The coating composition of claim 15, wherein said free radical polymerization takes place at a reactor gage pressure ranging from 0.1 to 3.5 MPa.

18. A process for producing a coating on a substrate, said process comprises:

a) mixing a crosslinkable and crosslinking components of a coating composition to form a potmix, wherein said crosslinkable component consists of:

a copolymer having on an average 2 to 25 crosslinkable hydroxyl groups; a weight average molecular weight (measured by GPC) ranging from 1000 to 4500; a polydispersity ranging from 1.05 to 2.5; wherein said copolymer is polymerized from a monomer mixture comprising one or more non-functional methacrylate monomers and one or more functional acrylate monomers provided with said functional groups, wherein said crosslinking component for said crosslinkable groups is a polyisocyanate, and wherein said copolymer is produced by free radical polymerization of said monomer mixture at a polymerization temperature ranging from 120°C to 300°C.

b) applying a layer of said potmix on said substrate;
c) curing said layer into said coating on said substrate.

19. The process of claim 18 further comprising air drying said layer after said application step.

20. The process of claim 18 or 19, wherein said curing step is at temperatures ranging from ambient to 204°C.

21. The process of claim 18, wherein said substrate is an automotive body.

**Patentansprüche**

1. Beschichtungszusammensetzung umfassend vemetzbare und vernetzende Komponenten, wobei die vemetzbare Komponente aus Folgendem besteht:

einem Copolymer, das im Durchschnitt 2 bis 25 vemetzbare Hydroxylgruppen, ein gewichtsdurchschnittliches Molekulargewicht (durch GPC gemessen) im Bereich von 1000 bis 4500; eine Polydispersität im Bereich von 1,05 bis 2,5 aufweist; wobei das Copolymer aus einer Monomermischung polymerisiert wird, die ein oder mehrere nichtfunktionelle Methacrylatmonomere und ein oder mehrere funktionelle Acrylatmonomere, die mit den funktionellen Gruppen ausgestattet sind, umfasst, wobei die vernetzende Komponente für die vernetzbaren Gruppen ein Polyisocyanat ist und wobei das Copolymer durch Radikalpolymerisation der Monomermischung bei einer Polymerisationstemperatur im Bereich von 120°C bis 300°C hergestellt wird.

2. Beschichtungszusammensetzung nach Anspruch 1, wobei das nichtfunktionelle Methacrylatmonomer mit einer nichtfunktionellen Gruppe ausgestattet ist, ausgewählt aus der Gruppe bestehend aus linearem $C_1$- bis $C_{20}$-Alkyl, verzweigtem $C_3$- bis $C_{20}$-Alkyl, cyclischem $C_3$- bis $C_{20}$-Alkyl, Aromat mit 2 bis 3 Ringen, Phenyl und $C_1$- bis $C_{20}$-Fluorkohlenstoff.

3. Beschichtungszusammensetzung nach Anspruch 1, wobei das Copolymer eine Tg (Glasübergangstemperatur, in °C gemessen, durch DSC (Differential-Scanning-Kalorimetrie) bestimmt) im Bereich von -10°C bis 80°C aufweist.

4. Beschichtungszusammensetzung nach Anspruch 1, wobei die Zusammensetzung eine flüchtige organische Verbindung (VOC) (dem in ASTM D3960 bereitgestellten Verfahren gemäß bestimmt) im Bereich von 0,1 Kilogramm bis 0,72 Kilogramm pro Liter aufweist.

5. Beschichtungszusammensetzung nach Anspruch 1, wobei das Polyisocyanat mit Isocyanatfunktionalitäten innerhalb des Bereichs von 2 bis 10 ausgestattet ist.

6. Beschichtungszusammensetzung nach Anspruch 1, wobei die vemetzbare Komponente des Weiteren einen Katalysator umfasst ausgewählt aus der Gruppe bestehend aus einer Zinnverbindung, einem tertiären Amin, einem sauren Katalysator oder einer Kombination davon.

**7.** Beschichtungszusammensetzung nach Anspruch 1, wobei die Zusammensetzung eine klare Beschichtungszusammensetzung, pigmentierte Zusammensetzung, metallisierte Beschichtungszusammensetzung, Basislackzusammensetzung, Einzellackzusammensetzung oder ein Grundiermittel ist.

**8.** Beschichtungszusammensetzung nach Anspruch 1, wobei die Monomermischung des Weiteren saure Monomere umfasst.

**9.** Beschichtungszusammensetzung nach Anspruch 1, wobei das Copolymer mit Silanfunktionalitäten durch Nachreagieren des Copolymers, das die Hydroxylfunktionalitäten aufweist, mit Isocyanatpropyltrimethoxysilan ausgestattet wird.

**10.** Beschichtungszusammensetzung nach Anspruch 1, wobei die Monomermischung des Weiteren 0,01 bis 10 Gew.-% funktionelle Acrylatmonomere umfasst.

**11.** Beschichtungszusammensetzung nach Anspruch 1, wobei die Monomermischung des Weiteren 0,01 bis 10 Gew.-% nichtfunktionelle Methacrylatmonomere umfasst.

**12.** Beschichtungszusammensetzung nach Anspruch 1, wobei die vernetzbare Komponente des Weiteren 0,1 Gewichtsprozent bis 95 Gewichtsprozent, auf das Gesamtgewicht der vernetzbaren Komponente eines Acrylpolymers, eines Polyesters, reaktiven Oligomers, nichtalicyclischen Oligomers oder einer Kombination davon bezogen, umfasst.

**13.** Beschichtungszusammensetzung nach Anspruch 1, wobei die vernetzbare Komponente des Weiteren 0,1 bis 50 Gewichtsprozent eines dispergierten Acrylmonomers umfasst, wobei der Prozentsatz auf das Gesamtgewicht der Zusammensetzungsfeststoffe bezogen ist.

**14.** Beschichtungszusammensetzung nach Anspruch 1, die des Weiteren ein Aldimin, einen Polyasparaginsäureester oder eine Kombination davon umfasst.

**15.** Beschichtungszusammensetzung nach Anspruch 13, wobei ein Verhältnis der nichtfunktionellen Methacrylatmonomere zu den funktionellen Acrylatmonomeren in der Mischung im Bereich von 90:10 bis 10:90 liegt.

**16.** Beschichtungszusammensetzung nach Anspruch 15, wobei die Gesamtmenge der nichtfunktionellen Methacrylatmonomere und der funktionellen Acrylatmonomere in der Monomermischung im Bereich von 100 Prozent bis 60 Prozent, auf das Gesamtgewicht der Monomermischung bezogen, liegt.

**17.** Beschichtungszusammensetzung nach Anspruch 15, wobei die Radikalpolymerisation bei einem Reaktormanometerdruck im Bereich von 0,1 bis 3,5 MPa stattfindet.

**18.** Verfahren zur Herstellung einer Beschichtung auf einem Substrat, wobei das Verfahren Folgendes umfasst:

a) das Mischen vernetzbarer und vernetzender Komponente einer Beschichtungszusammensetzung unter Bildung einer Gebrauchsmischung, wobei die vernetzbare Komponente aus Folgendem besteht:

einem Copolymer, das im Durchschnitt 2 bis 25 vernetzbare Hydroxylgruppen; ein gewichtsdurchschnittliches Molekulargewicht (durch GPC gemessen) im Bereich von 1000 bis 4500; eine Polydispersität im Bereich von 1,05 bis 2,5 aufweist; wobei das Copolymer aus einer Monomermischung polymerisiert wird, die ein oder mehrere nichtfunktionelle Methacrylatmonomere und ein oder mehrere funktionelle Acrylatmonomere, die mit den funktionellen Gruppen ausgestattet sind, umfasst, wobei die vernetzende Komponente für die vernetzbaren Gruppen ein Polyisocyanat ist und wobei das Copolymer durch Radikalpolymerisation der Monomermischung bei einer Polymerisationstemperatur im Bereich von 120°C bis 300°C hergestellt wird,

b) das Auftragen einer Schicht der Gebrauchsmischung auf das Substrat;
c) das Aushärten der Schicht zu der Beschichtung auf dem Substrat.

**19.** Verfahren nach Anspruch 18, des Weiteren das Lufttrocknen der Schicht nach dem Auftragschritt umfassend.

**20.** Verfahren nach Anspruch 18 oder 19, wobei der Aushärtungsschritt bei Temperaturen im Bereich von der Umgebungstemperatur bis 204 °C erfolgt.

**21.** Verfahren nach Anspruch 18, wobei das Substrat eine Karosserie ist.

## Revendications

**1.** Composition de revêtement comprenant des composants réticulables et de réticulation, dans laquelle ledit composant réticulable est constitué de :

un copolymère ayant sur une moyenne 2 à 25 groupes hydroxyles réticulables, un poids moléculaire moyen en poids (mesuré par CPG) s'étendant de 1 000 à 4 500 ; une polydispersion s'étendant de 1,05 à 2,5 ; dans laquelle ledit copolymère est polymérisé à partir d'un mélange de monomères comprenant un ou plusieurs monomère(s) non fonctionnel(s) méthacrylate(s) et un ou plusieurs monomère(s) fonctionnel(s) acrylate(s) présentant lesdits groupes fonctionnels,
dans laquelle ledit composant de réticulation pour lesdits groupes réticulables est un polyisocyanate, et dans laquelle ledit copolymère est produit par polymérisation radicalaire dudit mélange de monomères à une température de polymérisation s'étendant de 120 °C à 300 °C.

**2.** Composition de revêtement selon la revendication 1, dans laquelle ledit monomère non fonctionnel méthacrylate est pourvu d'un groupe non fonctionnel sélectionné parmi le groupe constitué d'un groupe alkyle linéaire en $C_1$ à $C_{20}$, alkyle ramifié en $C_3$ à $C_{20}$, alkyle cyclique en $C_3$ à $C_{20}$, aromatique avec 2 à 3 cycles, phényle et hydrocarbure fluoré en $C_1$ à $C_{20}$.

**3.** Composition de revêtement selon la revendication 1, dans laquelle ledit copolymère a une Tg (température de transition vitreuse mesurée en ° C déterminée par ACD (colorimétrie différentielle à compensation de puissance)) s'étendant de -10°C à 80 °C.

**4.** Composition de revêtement selon la revendication 1, dans laquelle ladite composition a une teneur en COV (déterminée sous la procédure fournie dans le procédé de test ASTM D3960) s'étendant de 0,1 kilogramme à 0,72 kilogramme par litre.

**5.** Composition de revêtement selon la revendication 1, dans laquelle ledit polyisocyanate est pourvu de fonctionnalités isocyanates situées dans la plage de 2 à 10 fonctionnalités isocyanates.

**6.** Composition de revêtement selon la revendication 1, dans laquelle ledit composant réticulable comprend en outre un catalyseur sélectionné parmi le groupe constitué d'un composé de type étain, d'une amine tertiaire, d'un catalyseur acide et de leur combinaison.

**7.** Composition de revêtement selon la revendication 1, dans laquelle ladite composition est une composition de revêtement claire, une composition pigmentée, une composition de revêtement métallisée, une composition de revêtement de fond, une composition pour monocouche ou une amorce.

**8.** Composition de revêtement selon la revendication 1, dans laquelle ledit mélange de monomères comprend en outre des monomères acides.

**9.** Composition de revêtement selon la revendication 1, dans laquelle ledit copolymère est pourvu de fonctionnalités silanes par post réaction dudit copolymère ayant lesdites fonctionnalités hydroxyles avec de l'isocyanatopropyle triméthoxy silane.

**10.** Composition de revêtement selon la revendication 1, dans laquelle ledit mélange de monomères comprend en outre 0,01 % à 10 % en poids de monomères fonctionnels de type acrylate.

**11.** Composition de revêtement selon la revendication 1, dans laquelle ledit mélange de monomères comprend en outre 0,01 % à 10 % en poids de monomères non fonctionnels de type méthacrylate.

**12.** Composition de revêtement selon la revendication 1, dans laquelle ledit composant réticulable comprend en outre 0,1 % en poids à 95 % en poids sur la base du poids total du composant réticulable d'un polymère acrylique, d'un polyester, d'un oligomère réactif, d'un oligomère non alicyclique ou d'une combinaison de ceux-ci.

**13.** Composition de revêtement selon la revendication 1, dans laquelle ledit composant réticulable comprend en outre 0,1 à 50 % en poids d'un monomère acrylique dispersé, le pourcentage étant basé sur le poids total des matières solides de la composition.

**14.** Composition de revêtement selon la revendication 1, qui comprend en outre une aldimine, un ester polyaspartique ou une combinaison de ceux-ci.

**15.** Composition de revêtement selon la revendication 13, dans laquelle un rapport desdits monomères non fonctionnels de type méthacrylate auxdits monomères fonctionnels de type acrylate dans ledit mélange s'étend de 90:10 à 10:90.

**16.** Composition de revêtement selon la revendication 15, dans laquelle la quantité totale desdits monomères non fonctionnels de type méthacrylate et desdits monomères fonctionnels de type acrylate dans ledit mélange de monomères s'étend de 100 % à 60 % sur la base du poids total dudit mélange de monomères.

**17.** Composition de revêtement selon la revendication 15, dans laquelle ladite polymérisation radicalaire a lieu à une pression manométrique du réacteur s'étendant de 0,1 à 3,5 MPa.

**18.** Procédé de production d'un revêtement sur un substrat, ledit procédé comprenant :

a) le mélange de composants réticulables et de réticulation d'une composition de revêtement pour former un mélange en pot, dans laquelle ledit composant réticulable est constitué de :

un copolymère ayant sur une moyenne 2 à 25 groupes hydroxyles réticulables ; un poids moléculaire moyen en poids (mesuré par CPG) s'étendant de 1 000 à 4 500 ; une polydispersion s'étendant de 1,05 à 2,5 ; dans laquelle ledit copolymère est polymérisé à partir d'un mélange de monomères comprenant un ou plusieurs monomère(s) non fonctionnel(s) de type méthacrylate et d'un ou plusieurs monomère(s) fonctionnel(s) de type acrylate pourvu desdits groupes fonctionnels, dans lequel ledit composant de réticulation pour lesdits groupes réticulables est un polyisocyanate, et dans lequel ledit copolymère est produit par polymérisation radicalaire dudit mélange de monomères à une température de polymérisation s'étendant de 120° C à 300° C,

b) application d'une couche dudit mélange en pot sur ledit substrat ;
c) durcissement de ladite couche dans ledit revêtement sur ledit substrat.

**19.** Procédé selon la revendication 18, comprenant en outre le séchage à l'air de ladite couche après ladite étape d'application.

**20.** Procédé selon la revendication 18 ou 19, dans lequel ladite étape de durcissement se situe à des températures s'étendant de la température ambiante jusqu'à 204° C.

**21.** Procédé selon la revendication 18, dans lequel ledit substrat est une carrosserie automobile.

**EP 1 639 048 B1**

**REFERENCES CITED IN THE DESCRIPTION**

**Patent documents cited in the description**

- US 5279862 A
- US 5314953 A
- US 6221494 B1
- US 2002040097 A
- WO 2004007627 A
- US 6221494 B
- US 5286782 A